(19) Europäisches Patentamt

European Patent Office

Office européen des brevets

(11) **EP 1 459 203 B1**

(12) **EUROPÄISCHE PATENTSCHRIFT**

(45) Veröffentlichungstag und Bekanntmachung des Hinweises auf die Patenterteilung:
**19.04.2006 Patentblatt 2006/16**

(21) Anmeldenummer: **02790448.1**

(22) Anmeldetag: **28.11.2002**

(51) Int Cl.:
*G06F 17/00* (2006.01)    *G06T 5/50* (2006.01)

(86) Internationale Anmeldenummer:
**PCT/EP2002/013406**

(87) Internationale Veröffentlichungsnummer:
**WO 2003/046753 (05.06.2003 Gazette 2003/23)**

(54) **VERFAHREN ZUR GEFÜHRTEN "BLIND DECONVOLUTION" MIKROSKOPISCHER BILDER UND SOFTWARE**

METHOD FOR GUIDED BLIND DECONVOLUTION OF MICROSCOPIC IMAGES AND SOFTWARE

PROCEDE DE DECONVOLUTION AVEUGLE COMMANDEE D'IMAGES MICROSCOPIQUES ET LOGICIEL

(84) Benannte Vertragsstaaten:
**DE FR GB**

(30) Priorität: **28.11.2001 DE 10158163**
**30.10.2002 DE 10250775**

(43) Veröffentlichungstag der Anmeldung:
**22.09.2004 Patentblatt 2004/39**

(73) Patentinhaber: **Leica Microsystems CMS GmbH**
**35578 Wetzlar (DE)**

(72) Erfinder:
• **GANSER, Michael**
**35398 Giessen (DE)**
• **WESNER, Joachim**
**35633 Lahnau (DE)**

(74) Vertreter: **Reichert, Werner Franz**
**Leica Microsystems AG,**
**Konzernstelle Patente + Marken,**
**Ernst-Leitz-Strasse 17-37**
**35578 Wetzlar (DE)**

(56) Entgegenhaltungen:
• **CONCHELLO J -A ET AL: "Parametric blind deconvolution of fluorescence microscopy images: preliminary results" THREE-DIMENSIONAL MICROSCOPY: IMAGE ACQUISITION AND PROCESSING III, SAN JOSE, CA, USA, 30 JAN.-1 FEB. 1996, Bd. 2655, Seiten 164-174, XP002235274 Proceedings of the SPIE - The International Society for Optical Engineering, 1996, SPIE-Int. Soc. Opt. Eng, USA ISSN: 0277-786X**
• **GIBSON S F ET AL: "Experimental test of an analytical model of aberration in an oil-immersion objective lens used in three-dimensional light microscopy" JOURNAL OF THE OPTICAL SOCIETY OF AMERICA A (OPTICS AND IMAGE SCIENCE), OCT. 1991, USA, Bd. 8, Nr. 10, Seiten 1601-1613, XP002235275 ISSN: 0740-3232**
• **MARKHAM J ET AL: "Parametric blind deconvolution: a robust method for the simultaneous estimation of image and blur" JOURNAL OF THE OPTICAL SOCIETY OF AMERICA A (OPTICS, IMAGE SCIENCE AND VISION), OCT. 1999, OPT. SOC. AMERICA, USA, Bd. 16, Nr. 10, Seiten 2377-2391, XP002235276 ISSN: 0740-3232**
• **BOUTET DE MONVEL J ET AL: "Image restoration for confocal microscopy: improving the limits of deconvolution, with application to the visualization of the mammalian hearing organ" BIOPHYSICAL JOURNAL, MAY 2001, BIOPHYS. SOC, USA, Bd. 80, Nr. 5, Seiten 2455-2470, XP002235277 ISSN: 0006-3495**

EP 1 459 203 B1

**Beschreibung**

Die Erfindung betrifft Verfahren zur geführten Blind Deconvolution mikroskopischer Bilder.

Ferner umfasst die Erfindung ein Computerprogramm, das einen Rechner dazu veranlasst ein Verfahren zur Bind Deconvolution mikroskopischer Bilder durchzuführen.

Ein Bild eines Objekts hängt ab vom Objekt selbst und der Apparatefunktion des abbildenden Systems. Die Apparatefunktion im Ortsraum wird Punktbildfunktion genannt, die im Englischen als "Point Spread Function", abgekürzt auch als "PSF", bezeichnet wird. Im Ortsfrequenzraum wird die fouriertransformierte Funktion der PSF als "Optical Transfer Function" bezeichnet, abgekürzt "OTF". In der nachstehenden Beschreibung werden ausschließlich die Abkürzungen PSF und OTF verwendet.

Strenggenommen ist die PSF bei feststehendem abbildenden System eine Funktion von 6 Koordinaten, wenn sowohl das Objekt als auch der Bildraum als dreidimensional (mit x-, y- und z-Koordinaten) angesehen werden.

Im allgemeinen wird aber angenommen, dass die PSF nur von Relativkoordinaten abhängt (z.B. bezogen auf Punkte und Ebenen des besten Fokus) und damit für alle Punkte innerhalb des Objekts bzw. Bildfelds den gleichen Verlauf hat., damit eröffnet sich die Möglichkeit, für die numerische Lösung des Problems mit OTF effektiver zu arbeiten.

In dem hier betrachteten Fall der hochauflösenden Mikroskopie dreidimensionaler Objekte ist die objektseitige Schärfentiefe (bezogen auf eine Bildebene) des abbildenden Objektivs sehr gering, so dass zur vollständigen Erfassung der dreidimensionalen Struktur Objekt und Objektiv in z-Richtung relativ zueinander bewegt werden müssen und eine entsprechende Anzahl von Bildern (ein "Bildstapel") vieler horizontaler "Schnitte" aufgenommen werden müssen.

Mit verschiedenen mathematischen Verfahren ist es nun aber möglich, bei Vorlage eines kompletten Bildstapels, das "Übersprechen" zwischen den einzelnen Schichten zu bestimmen und schließlich aus den Daten zu "subtrahieren" und damit sowohl die theoretisch mögliche Auflösung in x und y wieder herzustellen, als auch die Auflösung in z wesentlich zu verbessern. Diese Verfahren werden allgemein als Dekonvolution bezeichnet.

Dazu ist aber in der Regel, bis auf einige sehr einfache Verfahren, die nicht besonders leistungsfähig sind, eine genaue Kenntnis der PSF erforderlich, die ja den jeweiligen Grad des "Übersprechens" und der "Verschmierung" beschreibt. Leider ist die PSF in der Praxis empfindlich von einigen oft nur unvollständig bekannten experimentellen Parametern abhängig. Diese sind speziell die optischen Eigenschaften der Immersionsmedien, wie deren Brechungsindex n, der mit Temperatur und Konzentration variiert, und deren optischen Dicken d, wodurch auch eine störende Abhängigkeit von der Fokussiertiefe ins Präparat auftreten kann (siehe hierzu M.J.Booth, M.A.A. Neil and T. Wilson, "Aberration correction for confocal imaging in refractiveindex-mismatched media", Joumal of Microscopy, 192(2), 90-8, (1998), und C.J.R. Sheppard and P. Török, "Effects of the specimen refractive index on confocal imaging", Joumal of Microscopy, 185(3), 366-74, (1997).

Für die Ermittlung einer PSF zur Deconvolution werden in Stand der Technik verschiedene Wege angewandt. Es können z.B: theoretische PSFs, d.h. die PSF wird aus einem (u. U. stark vereinfachten) Modell des Objektivs bzw. des gesamten Mikroskops, berechnet. Die Problematik an der Benutzung einer theoretischen PSF bezieht sich meist darauf, dass das zugrundeliegende Modell zu einfach sei, d h nicht alle Parameter des Objektivs und /oder der Objekteinbettung bzw. die Umgebung um das Objekt berücksichtigt sind. In der Praxis zeigt sich, dass das Objektiv selbst leidlich gut und einfach zu beschreiben ist (moderne Objektive sind hinreichend ideal), demgegenüber ist es vergleichsweise schwer, die Parameter der Objekteinbettung bzw. die Umgebung um das Objekt ausreichend gut zu definieren bzw. konstant zu halten. Problempunkte sind dicke Proben, lebende Zellen in Lösungen mit teilweise unbekannter Beschaffenheit etc.

Eine andere Möglichkeit des Standes der Technik ist, dass die PSFs aus dem Bildstapel eines als punktförmig idealisierten, mikroskopisch kleinen Partikels (sog. "beads") in realer (möglichst repräsentativer) Einbettung und Umgebung abgeleitet werden. Die Messung einer PSF löst trotz des damit verbundenen Aufwands das erwähnte Problem nur unvollständig. Hier muss ein Kompromiss zwischen verschiedenen, sich gegenseitig widersprechenden, Forderungen gefunden werden: Eine möglichst genaue Bestimmung der wahren PSF (ohne systematische Fehler) erfordert "beads" verschwindender Größe, die aber auch nur zu einem verschwindenden Messsignal führen und darüber hinaus schwer zu handhaben sind. Es muss sichergestellt sein, dass sich kein zweites "bead" oder ein anderer Fremdkörper im Bereich der in x, y und z ausgedehnten PSF befindet. Wird eine so gemessene PSF zur Dekonvolution mehrerer Bildstapel eingesetzt, ist zu berücksichtigen, dass Fehler der PSF durch Rauschen oder auch Vibrationen während deren Messung sich in systematischer Weise in allen Bildstapeln auswirken . Ähnliches gilt auch für die Unsicherheit, ob die Bedingungen bei der Aufnahme der PSF hinreichend mit den Bedingungen für die einzelnen Bildstapel entsprechen.

Eine weitere Möglichkeit ist die Ausnutzung der "Redundanz" eines Bildstapels, um sowohl die unbekannte PSF als auch das Objekt simultan zu rekonstruieren (sogenannte "blind deconvolution"). Für ein eindeutiges Ergebnis müssen allerdings verschiedene Vorinformationen und Einschränkungen bzw. Bedingungen ("a-priori information" und "constraints") für Objekt und PSF als gültig vorausgesetzt werden. Dazu gehören z.B. , dass die Objektintensitätswerte nicht negativ sein können, und dass die PSF . "bandlimitiert" entsprechend der numerischen Apertur der Optik sein muss, aber auch (vereinfachende) Annahmen, dass die PSF und evtl, auch das Objekt beide endlich ausgedehnt sind und eine bestimmte Symmetrie haben (siehe hierzu D. Kundur and D. Hatzinakos, "Blind Image Deconvolution: An Algorithmic Approach to Practical Image Restoration", IEEE Signal Processing Magazine, 43-64, (1996) und E.Thiebaut and J.M. Conan, "Strict a priori constraints for maximum-likelihood blind deconvolution", J. Opt. Soc. Am. A, 12(3), 485-92, (1995). Kommerzielle Computerprogramme (z.B. "Autodebiur" von Autoquant, USA) erreichen bei geeignetem Bildmaterial z.T. überzeugende Ergebnisse. Der für Nichtfachleute unanschauliche Algorithmus, der hohe Rechenaufwand (Zeitaufwand) und die dabei möglichen Artefakte, haben eine breite Akzeptanz speziell dieses Ansatzes bisher verhindert. Der verwendete Algorithmus ist auch grundsätzlich "blind" im optischen Sinne, d.h. er kann im Prinzip auf jedes Problem der Faltung eines positiven Signals mit einer weiteren positiven und bandlimitierten "Antwortfunktion" angewandt werden, er macht aber keine Zusatzannahmen über die geometrisch-optischen Besonderheiten des abbildenden Systems, hat also keine spezifische "Kenntnis" der mikroskopischen Abbildung.

Eine Sonderform der "blind deconvolution" ist die Parametrisch geführte blinde Dekonvolution (siehe hierzu J. A. Conchello and Q. Yu, "Parametric blind deconvolution of fluorescence microscope images: Preliminary results" in *Three-Dimensional microscopy: image acquisition and processing,* C. J. Cogswell, G. S. Kino, and T. Wilson, editors, Proceedings of the SPIE 2655, 164-74, (1996) und J. Markham and J. A. Conchello, "Parametric blind deconvolution of microscopic images: Further results", in *Three-dimensional and multidimensional microscopy: Image Aquisition and Processing V,* C. J. Cogswell, J. A. Conchello, J. M. Lerner, T. Lu, and T. Wilson, chairs/editors Proc. SPIE; volume 3261, 38-49, (1998). Diese Art der Dekonvolution lässt sich als Kombination ein vollkommen parametrischen Dekonvolution und einer reinen Blind-Dekonvolution betrachten. Dazu gehört ein physikalisches Modell der PSF (siehe hierzu S.F.Gibson and F. Lanni, "Experimental test of an analytical model of aberration in an oil-immersion objective lens used in three-dimensional light microscopy", J.Opt.Soc.Am.A, 8(10), 1601-13, (1991). Dieses Problem wird durch die Parametrisierung der PSF grundsätzlich adressiert, da damit auch auf einfache Weise die erwähnten Vorinformationen und Bedingungen (sozusagen "automatisch") berücksichtigt werden können. So verwendet man verwendet z.B. insgesamt ca.14 Parameter zur Charakterisierung einer theoretischen PSF, wovon 7 Parameter experimentelle Parameter sind, die Umgebungsbedingungen für ein Objekt beschreiben sollen. Hinzu kommt, dass auch eine Parametrisierung nach Öffnungsfehlem verschledener Ordnung verwendet werden können. Dabei wird aber eine Beschränkung entweder nur auf niedrige Terme, wodurch die Nachbildung der PSF insbesondere bei hohen Aperturen nur ungenau sein kann, oder viele unabhängige Terme bis zu hoher Ordnung, wobei aber die in der Praxis auftretende Verkopplung dieser Terme nicht erkannt werden.

Der Erfindung liegt die Aufgabe ein Verfahren zur geführten Blinde Deconvolution mikroskopischer Bilder zu schaffen, die optimal die Umgebung eines Objekts berücksichtigt und in kürzer Zeit ein Ergebnis liefert.

Diese Aufgabe wird gelöst durch ein Verfahren, das durch die Schritte des Anspruchs 1 gekennzeichnet ist.

Eine weitere Aufgabe der Erfindung ist, ein Computerprogramm zur geführten Blind Deconvolution mikroskopischer Bilder, die optimal die Umgebung eines Objekts berücksichtigt, in kurzer Zeit ein Ergebnis liefert und schell bei verschiedenen Mikroskopsystemen anwendbar ist.

Diese Aufgabe wird gelöst durch ein Computerprogramm, das die Merkamale des Anspruchs 10 umfasst.

Der Vorteil des erfindungsgemäßen Verfahrens und Computerprogramm ist, dass die Deconvolution schnell und von Artefakten frei ist. Die Daten des Objektivs bzw. des Objektivs und der In Strahlengang befindlichen optischen Elemente sind hinlänglich gut bekannt. So dass diese Parameter für die Ermittlung der zuzulassenden PSF konstant sind. Folglich beschränken sich die optisch möglichen PSFs sich auf einen kleinen, nur eindimensionalen Unterraum. Durch diese Vorgehensweise ist sowohl eine deutliche Verringerung der Rechenzeit als auch der Artefakte zu erwarten. Bei der Bestimmung der PSF wird lediglich ein einziger Parameter vaniert, der der Umgebung zwischen Objekt und Objektiv Rechnung trägt Dabei umfasst der Parameter die vorhandenen Brechungsindizes der in der Umgebung vorgesehenen Medien ferner kann auch eine Temperaturäderung mit einbezogen werden.

In der Zeichnung ist der Erfindungsgegenstand schematisch dargestellt und wird anhand der Figuren nachfolgend beschrieben. Dabei zeigen:

Fig. 1     den "wahren" Wellenfrontfehler für 50 λ Dickenfehler des Deckglases beim 63x/1.30 Glyc Corr. Objektiv;

Fig. 2     den Aberrationsverlauf für einem Wellenfrontfehler für 50 λ Dickenfehler des Deckglases beim 63x/1.30 Glyc;

Fig. 3     den Vergleich eines gerechneten Beispiels für APO 63x/1.30 Glyc Corr, zwischen der "universellen" Formel und der "exakten" Formel inklusive Defokus;

Fig. 4     den Vergleich der Restaberrationen im "besten Fokus"

Fig. 5     eine Darstellung einer idealen PSF;

Fig. 6    eine Darstellung einer PSF, bei der eine kleine Abweichung des Brechungsindexes des das Objekt umgebenden Mediums Einfluss nimmt;

Fig. 7    eine Darstellung der PSF nach- einer an der PSF aus Fig. 2 durchgeführten Kompensation;

Fig. 8    eine Darstellung einer PSF, bei der eine kleine Abweichung des Brechungsindexes des das Objekt umgebenden Mediums einen größeren Einfluss nimmt als in Fig. 2;

Fig. 9    eine Darstellung der PSF nach einer an der PSF aus Fig. 4 durchgeführten Kompensation;

Fig. 10    eine Darstellung einer PSF, bei der eine starke Abweichung des Brechungsindexes in eine dünnen Schicht in er Umgebung des Objekts eine starke Störung verursacht;

Fig. 11    eine Darstellung der PSF nach einer an der PSF aus Fig. 4. durchgeführten Kompensation;

Fig. 12    eine schematische Darstellung eines Mikroskopsystems zur Durchführung des Verfahrens;

Fig. 13    schematische Darstellung eine Mikroskopobjektivs und die das Objekt umgebenden Umgebung vor allem den typischen Aufbau der planaren optischen Schichten mit verschiedenen Brechungsindices zwischen Probe und Objektiv, und

Fig. 14    ein Blockdiagramm des erfindungsgemäßen Verfahrens.

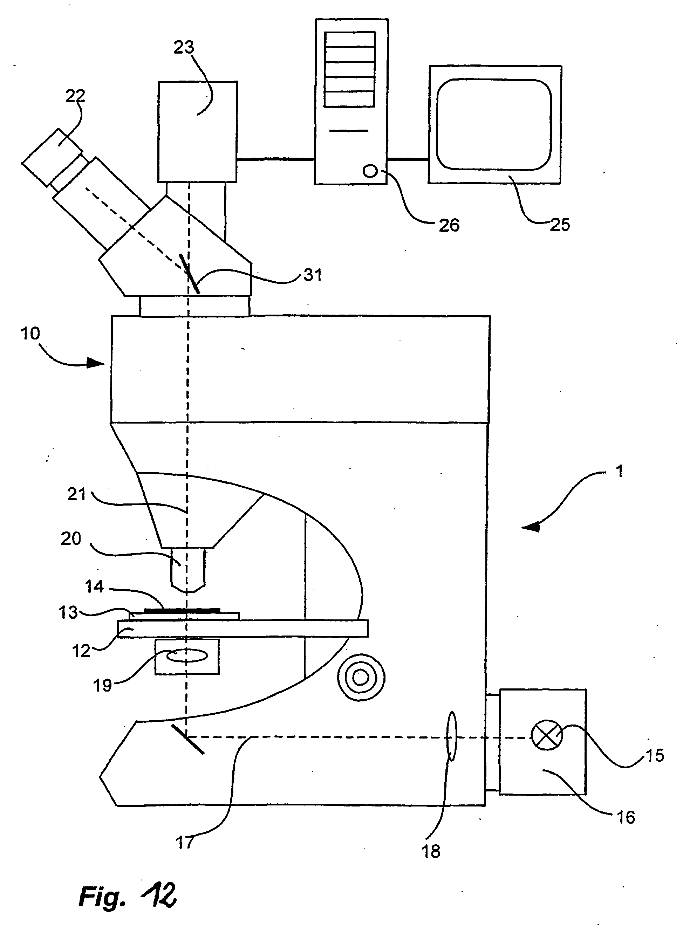

Für die blind Deconvolution sind vor allem die Wellenfrontfehler durch parallele Schichten mit unterschiedlichem Brechungsindex **n** zu berücksichtigen. Gegeben sei ein System von **N** parallelen, zur optischen Achse 21 eines Mikroskopobjektivs 20 (siehe Fig. 12) normalen Schichten mit unterschiedlichem Brechungsindex $n_i$ und einer Dicke $d_i$., z.B. bestehend aus verschiedenen Immersionsmedien und Deckgläsern. Schichten, die nicht parallel bzw. nicht normal angeordnet sind, was dann zu Koma führt, werden hier nicht betrachtet, da die dadurch in der Praxis zu erwartenden Aberrationen zwar durchaus störend, aber doch als um Größenordnungen kleiner als die Aberrationen durch den erwähnten "index mismatch" erwartet werden.

Weiter wird als Ausgangpunkt ein ideales optisches System (Objektiv + Tubuslinse usw.) angenommen, das für den Designfall, also eine ganz bestimmte Kombination von ns und ds, eine (annähernd) ideale Abbildung erreicht. Wir betrachten nun den Fall, dass eine der gegebenen Schichten (oder nur ein Teil davon) der Dicke **d** mit Design-Index $n_1$ durch eine Schicht mit Index $n_2$ ersetzt wird. Aus einer "Summe" solcher Änderungen können dann alle denkbaren Fälle paralleler Schichten mit beliebigen Eigenschaften zusammengesetzt werden. So würde eine reine Dickenänderung, z.B. des Deckglases, dem Ersatz eines Teils des Immersionsmediums mit Index $n_i$ durch eine Schicht mit dem Index des Deckglases $n_d$ entsprechen.

Für die dadurch bewirkte Wellenfrontänderung **w** findet man in der Literatur die folgende einfache, aber exakte Formel (z.B. Török et.al.)

$$w = d(\cos(\alpha_2)n_2 - \cos(\alpha_1)n_1 \qquad \text{Gleichung 1}$$

wobei **w** und **d** in (Vakuum-) $\lambda$ angegeben werden, $n_1$ und $n_2$ die beiden Brechungsindizes sind und $\alpha_1$ und $\alpha_2$ die Winkel eines Strahls gegen die optische Achse 21 in den beiden Medien angibt Diese Winkel lassen sich auch leicht angeben, wenn man, für die Praxis eher relevant, von einem Strahl konstanter "geometrischer" Apertur GA

$$GA = \sin(\alpha) = \frac{NA}{n} \qquad \text{Gleichung 2}$$

ausgeht, da sich eben diese Größe beim Durchgang durch die parallelen Schichten nicht ändert.

Dann gilt

$$\sin(\alpha_1) = GA \times \sin(\alpha_2) = GA \times \frac{n_1}{n_2} = \sin(\alpha_1) \times \frac{n_2}{n_1} \qquad \text{Gleichung 3}$$

und

$$\cos(\alpha_i) = \sqrt{(1 - \sin^2(\alpha_i))} \qquad \text{Gleichung 4}$$

Zu beachten ist, dass die obige Formel linear von der Dicke **d** abhängt, also die verursachte Aberration unabhängig von der jeweiligen absoluten Dicke immer den gleichen (relativen) "Verlauf" bzw. das gleiche "Zonenverhalten" zeigt oder mit anderen Worten für eine bestimmte Apertur aus einer ganz bestimmten Kombination von sphärischen Fehlern niedriger und höherer Ordnung besteht. Allerdings gilt erst einmal für jede Kombination aus $n_1$ und $n_2$ ein anderer.

Eine konstante Phasenverschiebung durch die unterschiedliche optische Dicke ist allerdings in der Regel nicht relevant, so dass man besser die Wellenfrontdeformation so definiert, dass sie für verschwindende Aperturen Null ist, also

$$w = d \times ((\cos(\alpha_2) - 1) \times n_2 - (\cos(\alpha_1) \times n_1) \qquad \text{Gleichung 5}$$

Für z.B. den in der Praxis relevanten Fall eines DIN-Deckglases in einer Glycerin-Immersion ($n_1$ = 1.460, $n_2$ = 1.524), findet man dann den folgenden Verlauf des Wellenfrontfehlers **w** in λ, für eine Deckglasdicke **d** (bzw. den Dickenfehler Δ**d** !) von 50 λ, etwa entsprechend dem maximal vorgesehenen Verstellbereich des 63x/1.30 Glyc Corr Objektivs von +/- 30 μm :

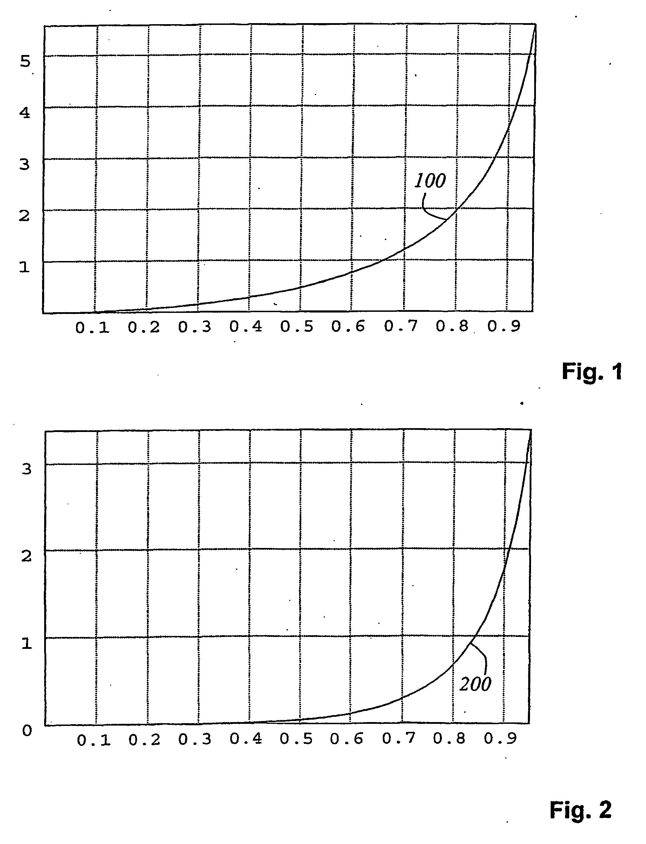

Fig. 1 zeigt den "wahren" Wellenfrontfehler für 50 λ Dickenfehler des Deckglases beim 63x/1.30 Glyc Corr. Objektiv. Allerdings zeigt diese Graphik 100 nur die "halbe Wahrheit". Neben einem konstanten Phasenfehler enthält die obige Aberration noch einen Defokus-Term, d.h. die Lage des schärfsten Bildes ändert sich bei Einbringung der zusätzlichen bzw. veränderten Schicht. Klassisch wird die Fokuslage oft durch den so genannten paraxialen Fokus definiert, die Position, in der alle quadratischen Aberrationsterme für verschwindende Aperturen Null sind. Dabei wird die Wirkung eines Defokus selbst nur als quadratische Änderung der Wellenfront angenähert. Für den obigen Fall findet man dann folgende Näherung:

$$w = d \times (\cos(\alpha_2) - 1) \times n_2 - (\cos(\alpha_1) - 1) \times n_1) - d(n_2 - n_1) \times \sin^2 \frac{\alpha_1}{2}$$

Daraus lässt sich allerdings auch relativ einfach eine bessere Korrektur angeben, bei der auch die höheren Ordnungen des Defokus korrekt berücksichtigt werden. (Mehr dazu weiter unten).

$$w = d \times (\cos(\alpha_2) - 1) \times n_2 - (\cos(\alpha_1) - 1) \times n_1) - d(n_2 - n_1) \times (1 - \cos(\alpha_1))$$

Damit findet man nun den in Fig. 2 dargestellten Aberrationsverlauf 200 für das obige Beispiel von: einem Wellenfrontfehler für 50 λ Dickenfehler des Deckglases beim 63x/1.30 Glyc, paraxialer Focus Dieses Diagramm zeigt deutlich, dass "index mismatch" Korrektur erst ab GA von etwa 0.4 überhaupt eine Rolle spielt und dass hauptsächlich Aberrationen hoher Ordnung eine Rolle spielen.

Bei hohen Aperturen macht auch die Minimierung der quadratischen und höheren Terme um die Pupillenmitte herum keinen Sinn mehr. Beste Abbildung wird nur dann erreicht, wenn der restliche Defokus-Term möglichst über die ganze Pupille "vermittelt" wird. Dies führt dann aber auch dazu, dass die resultierende Aberration im "besten Fokus" nicht nur Werte eines Vorzeichens hat, sondern um Null oszilliert. Siehe auch weiter unten.

Es existiert eine Universelle Formel" für verschwindende Indexunterschiede Δn. Für kleine (genau genommen infinitesimal kleine) Indexunterschiede Δn kann eine Näherung für den Wellenfrontfehler gefunden werden, die nicht nur proportional zur Dicke **d**, sondern auch proportional zum Indexunterschied Δn ist. Man findet im Grenzübergang, wieder nach Abzug der konstanten Phase

$$w = (d \times \Delta n) \times (\cos(\alpha_1) - 1 + \frac{\sin^2(\alpha_1)}{\cos(\alpha_1)})$$

Diese Näherung hängt nun nur noch vom Produkt aus Dicke und Indexfehler (und indirekt vom Brechungsindex $n_1$) ab, nicht mehr von anderen Parametern. Dieses Produkt sei im Folgenden als Corr-Wert Cr bezeichnet

$$Cr = d \times \Delta n$$

bzw. je nach Fall

$$Cr = \Delta d \times \Delta n.$$

Also entspricht der vorgestellte Fall der variablen Deckglaskorrektur in Glycerin einem Corr-Wert von etwa

$$Cr = 50 \times (1{,}524 - 1{,}460) = 3{,}2(\lambda)$$

Hier wird nun klar, dass (näherungsweise) mit nur einem Parameter z.B. sowohl Fehler der Deckglasdicke als auch der Temperatur oder Konzentration des Immersionsmediums beschrieben und korrigiert werden können.

Ein wesentlicher Punkt, der erst einmal nur für die erwähnte Näherung gilt, ist, dass sich durch diese Näherung auch beliebige, komplexe Schichtenfolgen durch eine einzige Äquivalenzschicht bzw. eine Aberration beschreiben lassen, die einfach der Summe der einzelnen Corr-Werte $Cr_{tot} = \Sigma Cr_i$ entspricht.

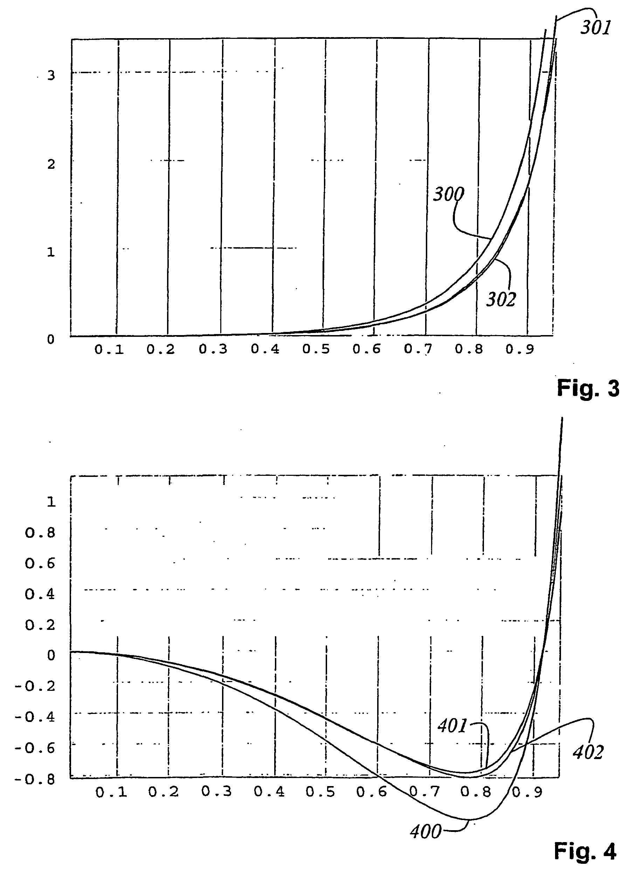

Fig. 3 zeigt den Vergleich eines gerechneten Beispiels für APO 63x/1.30 Glyc Corr, zwischen der "universellen" Formel und der "exakten" Formel inklusive Defokus. Mit den obigen Formeln kann nun die Qualität der "universellen Näherung" im erwähnten praktischen Beispiel untersucht werden. Vergleicht man das exakte Ergebnis (Kurve 300) mit der Näherung für Cr = 3.2 (Kurve 301), so ist die Übereinstimmung auf den ersten Blick nicht so überzeugend, auch wenn der Versatz der Fokuslagen schon ausgeglichen ist, man sieht am Pupillenrand Abweichungen bis zu etwa $\lambda/2$. Die Wellenfrontnäherung für **Cr** = 3.2 (Kurve 301) und Wellenfrontnäherung für **Cr** = 2.4 (Kurve 302) sind fast deckungsgleiche Kurven

Allerdings stellt obige Näherung noch nicht das Beste dar, das erreicht werden kann. Es ist schon zu erkennen, dass im beschriebenen Fall die Näherung grundsätzlich eine zu hohe Aberrationen vorhersagt. In der Praxis sind nun auch, sowohl im Falle der manuellen Einstellung eines Corr-Rings am Objektiv auf beste Abbildung, als auch bei der geplanten geführten "Blind-Deconvolution", die genauen optischen Parameter der Probeneinbettung unbekannt, sodass der optimale Cr-Wert nur durch "Probieren" gefunden wird Der numerische Cr-Wert ist gar nicht von Interesse. Es zeigt sich nun auch hier, dass eben ein etwas kleinerer Wert von **Cr** = 2.4 im sonst unveränderten Modell eine fast perfekte Übereinstimmung zur exakten Lösung herstellt.

Fig. 4 zeigt den Vergleich der Restaberrationen im "besten Fokus". Hier sind die Abweichungen noch etwas besser zu erkennen. Die wurden wie oben Wellenfrontfehler beim 63x/1.30 Glyc im "Besten Fokus" berechnet, dies ist durch Kurve 401 dargestellt. Die Wellenfrontnäherung für **Cr** = 3.2 ist durch die Kurve 402 und Wellenfrontnäherung für **Cr** = 2.4 ist durch die Kurve 403 dargestellt. Beide Kurven sind fast deckungsgleich. Während die direkte Anwendung der Näherung mit Cr = 3.2 zu (schon vermittelten) Wellenfrontfehlem > 0.2 $\lambda$ führt, kann der Restfehler mit optimalem Corr-Wert auf unter 1/20 dieses Werts gesenkt werden und ist damit in der Praxis irrelevant. Der Strehl-Wert im paraxialen Fokus verbessert sich dabei von max. 74 % bei einer noch stark unsymmetrischen z-Response auf praktisch perfekte 99.6 % bei weitgehend symmetrischer Response.

Auch hier ist abschließend nochmals zu betonen, dass diese Näherung sich auch auf praktisch beliebige Schichtensysteme anwenden lässt, ohne dass mehr als ein Parameter variiert werden muss. Der eine zu variierende Parameter stellt eine funktionelle Repräsentanz der einzelnen Parameter der Schichten in einem Schichtsystem dar. Wenn jede der Teilschichten sich durch einen geeigneten Wert von **Cr** hinreichend gut annähern lässt, kann das gesamte System auch hinreichend gut durch ein **Cr** gleich der Summe der **Crs** beschrieben werden, da die einzelnen Näherungen nur verschieden skalierte Abbilder der obigen "universellen Funktion" sind.

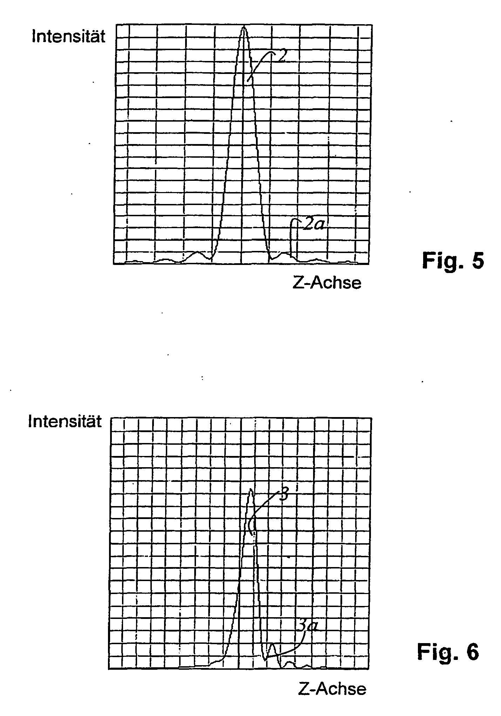

Die hier betrachteten PSF (Fig. 5 bis Fig. 11) sind also Funktionen von (x, y, z). In Hinblick auf die Zielrichtung der Erfindung wird die PSF als symmetrisch in (x, y) angenommen, besondere Betrachtung findet die Abhängigkeit von z, also die Betrachtung in Richtung der durch das Mikroskopsystem festgelegten optischen Achse.

In Fig. 5 ist beispielhaft eine "ideale" PSF dargestellt. Die Intensität I ist gegen Verschiebung in z (entlang der optischen Achse) des Mikroskopsystems aufgetragen. Dabei erhält man im Fokus eine hohe Intensität, die als deutlicher symmetrischer Peak 2 in der PSF hervortritt. Bewegt man sich vom Fokus weg (in beiden Richtungen, so wird treten kleine Nebenmaxima 2a auf, die dann schließlich im Rauschen untergehen.

In Fig. 6 ist nun eine PSF dargestellt, die durch eine kleine Abweichung des Brechungsindexes des das Objekt umgebenden Mediums entstanden ist. Es ist deutlich zu erkennen, dass durch dies Störung der Peak 3 der der gestörten PSF eine deutliche Unsymmetrie einnimmt. Ebenso treten Nebenpeaks 3a deutlicher hervor.

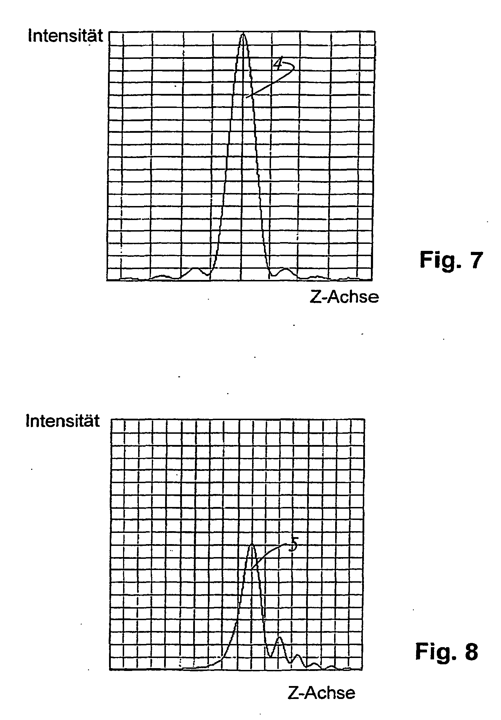

Diese in Fig. 6 dargestellte Veränderung der PSF wird durch die erfindungsgemäße Korrektur beseitigt. Der Peak 4 bei der korrigierten PSF ist von den Störungen befreit und zeigt wieder eine symmetrische Form. Die erfindungsgemäße Korrektur erfolgt derart, dass optische Wirkung der Objekteinbettung durch nur einen einzigen Parameter beschreibbar ist. Im Allgemeinen wir die Objekteinbettung durch eine Vielzahl von Parametern beschreiben. Diese können sein: Brechungsindex Objektträger, Brechungsindex Deckglas, Brechungsindex des die Probe umgebenden Mediums, Brechungsindex einer verwendeten Immersionsflüssigkeit, Temperatur etc. Die erfinderische Idee ist es nun diese verschiedenen Parameter zu einem Parameter zusammenzufassen, der dann eine "virtuelle Einbettung" des Objekts beschreibt. Die Auswirkung auf die Abbildung, wie aus Fig. 7 ersichtlich, ist eine sehr gute Näherung zur PSF aus Fig. 6.

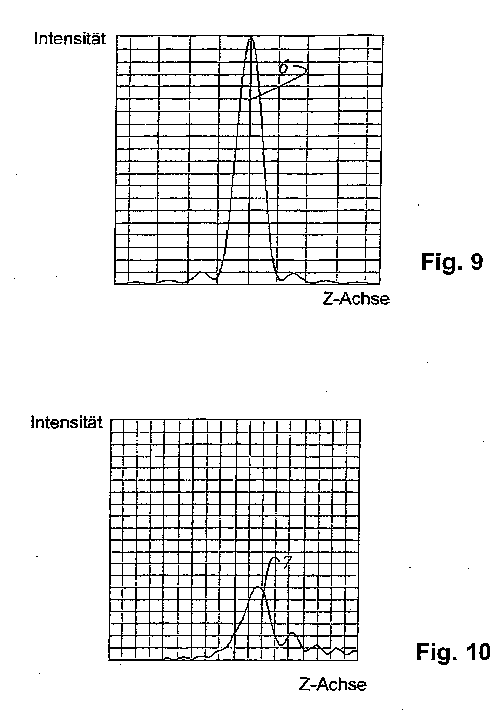

Die Fig. 8 zeigt eine deutlichere Auswirkung einer kleinen Abweichung im Brechungsindex auf die PSF. Der Peak 5 zeigt eine noch deutlicher Unsymmetrie. Dies Unsymmetrie ist auf grund des erfindungsgemäßen Verfahren auf einfache und schnelle Weise beseitigt (Fig. 9). Durch die Korrektur mit einem Parameter erhält der Peak 6 der PSF wieder die symmetrische Struktur und zeigt auch eine Angleichung der Intensität.

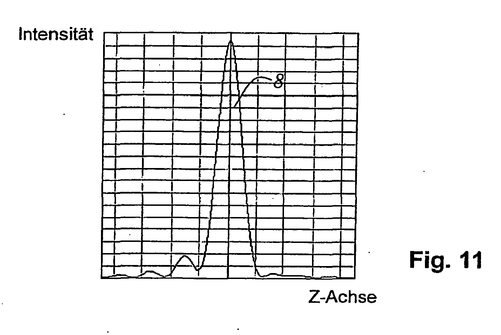

Der Fall einer starken Abweichung des Brechungsindexes in einer dünnen Schicht in der Umgebung des Objekts ist in Fig. 10 dargestellt. Der Peak 7 erfährt eine starke Störung und eine deutliche Unsymmetrie. Auch diese Störung, wie in Fig. 11 dargestellt, kann durch das erfindungsgemäße Verfahren beseitigt werden. Der Peak 8 erhält eine annähern symmetrische Struktur.

Aufgrund des oben dargestellten Ergebnisses des erfindungsgemäßen Verfahrens mit der Variation nur eine Parameters für die Rückrechnung der PSF, sind Mikroskop-Objektive mit einer "Korrektionsfassung" versehen. So kann innerhalb bestimmter Grenzen "gleichzeitig" sowohl Variationen von Glasdicke, Temperatur und auch Brechungsindex des Mediums "korrigiert" bzw. kompensiert werden. Durch diese einfache und nur ein optisches Bauteil im Strahlengang verändernde Vorrichtung. Kann auf mechanische Art und Weise die sogenannte virtuelle Einbettung korrigiert werden. In optischer Terminologie handelt es sich dabei um die Korrektur des Öffnungsfehlers" oder "sphärischen" Fehlers, bei dem die Phasenfront in der "Pupille" eines Objektivs durch eine rotationssymmetrische Funktion vierter und höherer Ordnung gestört ("aberriert") ist.

In der Mikroskopie mit hohen Aperturen (bzw. mit großen Öffnungswinkeln) müssen im Gegensatz zu den in der allgemeinen optischen Literatur gemachten Näherungen auch Aberrations-Terme höher als vierter Ordnung für eine Korrektur einer PSF berücksichtigt werden. Verschiedene Werte dieser Abweichung führen nun jeweils zu einem ganz bestimmten, eindeutigen Verlauf des Phasenfehlers in der Pupille. Mit anderen Worten bedeutet dies auch, dass nur ganz bestimmte Kombinationen von Termen vierter und höherer Ordnung (für ein Objektiv bekannter Apertur) in diesem Problem relevant sind.

Dass der erwähnte Zusammenhang, der nur noch einen freien Parameter ergibt, durchaus nicht zu trivialen PSF führt, zeigen die Fign. 5 bis 11. Sie sind Ergebnisse einer Simulationsrechnung: Sie zeigen optische Fehlanpassung in 3 verschiedenen Situationen (siehe hierzu Fig. 6, Fig. 8 und Fig. 10), Die aus den Fehlanpassungen resultierenden PSFs führt nach Rekonstruktion der PSF durch Variation eines Parameters zu nahezu idealen Verhältnissen.

Fig. 12 zeigt eine schematische Darstellung eines Mikroskopsystems 1 zur Durchführung des Verfahrens. Das Mikroskopsystem 1 umfasst ein Mikroskop 10 mit einem 12 auf. Der Mikroskoptisch 12 dient zur Aufnahme eines Objektträgers 13, auf dem eine zu betrachtende bzw. zu untersuchende Probe 14 ist aufgebracht ist. Bei dem Objektträger 13 kann es sich beispielsweise um einen Glas-Objektträger oder eine Petrischale handeln.

Bei dem dargestellten Mikroskop 10 handelt es sich um ein Durchlicht-Mikroskop, bei dem eine Beleuchtungseinrichtung unterhalb des Mikroskoptisches 12 und der Probe 14 angeordnet ist. Das Beleuchtungssystem umfasst eine Lichtquelle 15 in einem Lampenhaus 16, von der ein Beleuchtungsstrahlengang mit einer optischen Achse 17 ausgeht. Der Beleuchtungsstrahlengang wird durch eine Beleuchtungsoptik 18 und einen Kondensor 19 von unten auf den auf dem Mikroskoptisch 12 angeordneten Objektträger 13 mit der Probe 14 gerichtet.

Das die Probe 14 durchdringende Licht gelangt zu einem Objektiv 20 des Mikroskops 10, das oberhalb des Mikroskoptisches 12 und der Probe 14 angeordnet ist. Das Objektiv 20 definiert eine optische Achse 21, die mit der optischen Achse 17 des Beleuchtungssystems fluchtet. Das Mikroskop 10 kann mehrere Objektive 20 sowie eine Objektivwechsel-Vorrichtung umfassen, die hier vereinfachend nicht dargestellt sind. Da in der hier gezeigten Ausführungsform ein feststehender Mikroskoptisch 12 (englisch: fixed stage microscope) verwendet wird, erfolgt die Fokussierung des Beleuchtungslichts auf die Probe 14 durch Höhenverstellung des Objektivs 20. Innerhalb des Mikroskops 10 wird das Licht über nicht dargestellte Linsen und Spiegel mindestens einem Okular 22 des Mikroskops 10 zugeleitet, durch welches ein Bediener die auf dem Mikroskoptisch 12 angeordnete Probe 14 betrachten kann.

Das Mikroskop 10 ist femer mit einer Kamera 23 versehen, die ein Bild von der Probe 14 aufnimmt. Das Licht der jeweils eingestellten Beleuchtung gelangt über ein optisches Element 31 zu dem mindestens einen Okular 22, d.h. in der hier gezeigten Ausführungsform bei jeder Art von Beleuchtung.

Das von der Kamera 23 aufgenommene Bild wird auf einem Monitor 25 dargestellt, der mit einem Rechner 26 verbunden ist. Das System aus Rechner 26, Kamera 23 und Monitor 25 kann dazu verwendet werden, um motorisierte Mikroskopfunktionen, wie z.B. Filterverstellvorrichtungen oder eine (nicht dargestellte) Autofokuseinrichtung für das Mikroskop 10 ansteuern. Ferner dient der Rechner dazu das erfindungsgemäße Verfahren an Hand der aufgenommenen Bilddaten durchzuführen, das eine entsprechende ein parametrige Deconvolution der aufgenommenen Bilddaten zur folge hat.

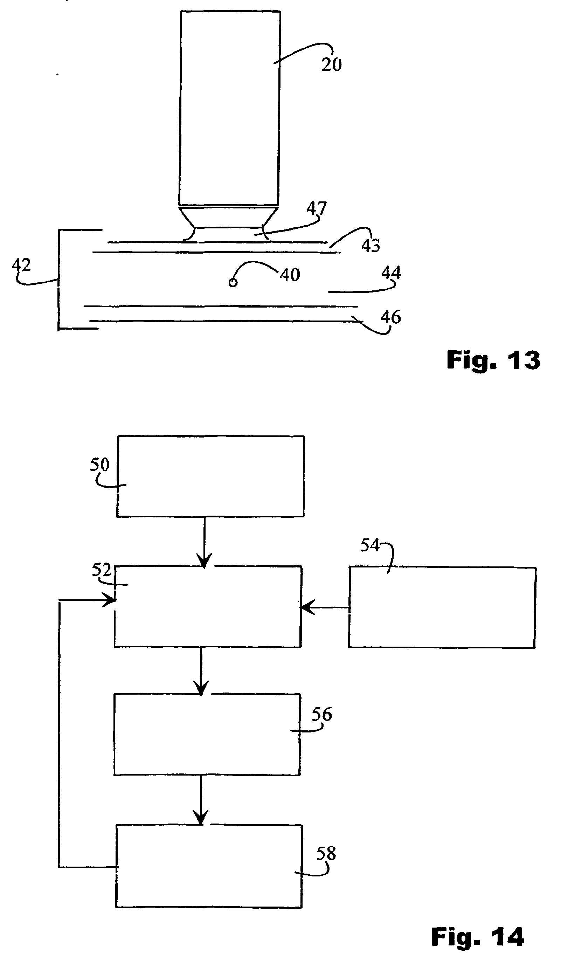

Fig. 13 zeigt eine schematische Darstellung eines Mikroskopobjektivs und die das Objekt 40 umgebenden Umgebung vor allem den typischen Aufbau der planaren optischen Schichten mit verschiedenen Brechungsindices zwischen Probe 42 und Objektiv 20. Die Probe 42 selbst besteht in dieser Ausführungsform aus dem Objektträger 13 mit einer bestimmten Bodendicke 46, einer Nährlösung 44 und einem Deckglas 43 Die Dick der Schichten von Boden 46 und Deckglas 43 sind nicht maßstäblich gezeichnet, typische Dicken sind $200\mu m$. Ein typische Größe des Objekts liegt bei $10\mu m$. Wenn eine physiologische Lösung bei der Mikroskopie Verwendung findet, befindet sich diese in der Regel in einer Petrischale. Der Boden der Petrischale stellt die Bodendicke 46 des Objektträgers 13 dar. Als optisch wirksame Schicht im physiologischen Medium tritt nicht die gesamte effektive Dicke des Bodens 46 und des Deckglases 43 auf, sondern nur der Abstand zwischen Objekt 40 und Deckglas 43. Die Dicke dieser Schicht ist also abhängig von der genauen Position des Objekts 40 in der Probe, innerhalb des Objekts 40 kann sie als konstant angesehen werden. Zwischen dem Objektiv 20 und dem Deckglas 43 ist ein Immersionsmedium 47 vorgesehen, das einen Brechungsindex n2 besitzt. Ebenso ist dem Deckglas 43 der Brechungsindex n3, der Nährlösung oder dem physiologischen Medium der Brechungsindex n4 und dem Objektträger 13 ebenfalls ein Brechungsindex n5 zugeschrieben.

Diese charakterisierenden Parameter der verschiedenen Schichten werden als experimentelle Parameter bezeichnet, da sie vom speziellen Experiment abhängig sind. Im Gegensatz hierzu stellen die Merkmale des Objektivs 20 und der zusätzlichen optischen Elemente in Strahlengang des Mikroskops festen, sogenannte Designparameter dar. Diese sind dem Benutzer gut bekannt und können z.B. als feste Parameter im Rechner 28 des Mikroskopsystems 1 gespeichert sein. Das in Fig. 9 gezeigte Modell hat also (bei angenommener Symmetrie um die optische Achse) sechs Parameter Um aus gegebenen Schichten die genaue PSF des Objektivs 20 in dieser speziellen Situation zu errechnen, müssten allerdings die Schichten alle mit hoher Genauigkeit in die Rechnung einfliesen .Das ist aber nicht das Ziel. Gemäß der Erfindung geht es darum, die möglichen Abweichungen von der idealen, durch die Designparameter bestimmten PSF zu beschreiben. Es reicht in sehr guter Näherung aus, einen Parameter rechnerisch zu variieren. Der maximale Öffnungswinkel des abbildenden Strahlenkegels ist als Zusatzinformation notwendig. Im idealen Fall ist dieser Winkel ebenfalls ein Designparameter, dabei gilt der sin(Öffnungswinkel) = NA/n2, mit NA als Numerische Apertur des Objektivs 20 und der nominale Brechungsindex des Immersionsmediums n2 ist auch ein Designparameter. Im praktisch häufigen Fall n4<n2 ist der maximale Öffnungswinkel reduziert um n2/n4. Dieser Wert geht aber im Gegensatz zur obengenannten Strahldurchrechnung schwach ein, so dass hier die Nominalwerte für die verwendeten Schichten (Öl, Glas, Wasser usw.) genommen werden können.

Fig. 14 zeigt ein Blockdiagram des erfindungsgemäßen Verfahrens. Die grundlegenden Funktionsweise eines "blind Deconvolution" Algorithmus ist so zu verstehen, dass alle im Rahmen der Vorinformation möglichen PSFs und Objekte so lange variiert werden, bis eine beste Übereinstimmung der damit errechneten Schnittbilder mit dem gemessenen Bildstapel gefunden wird. Es ist klar, dass die dazu nötige Rechenzeit und auch Stärke eventueller Artefakte dabei mit Zahl und Variationsbreite der Parameter massiv ansteigen.

Gemäß der Erfindung wird in einem ersten Schritt 50 ein Bild des Objekts 40 aufgenommen. Bei dem ersten Schritt 50 muss es sich nicht unbedingt um ein aufgenommenes Bild des Objekts handeln. Es kann auch von Benutzer eine Annahme getroffen werden was er erwartet. In einem zweiten Schritt 52 wird unter Einfluss einer Schätzung 54 der PSF innerhalb eines eindimensionalen Raumes wird ein zu erwartendes Bild des Objekts berechnet. Im Anschluss daran wird in einen vierten Schritt 56 ein Vergleich des berechneten Bildes und des Objekts mit dem aufgenommenen Bild des Objekts durchgeführt. Hier nehmen die verschiedenen Algorithmen Einfluss, die einen Abbruch bzw. eine Weiterführung der Iterationen ermöglichen. Wird eine mangelhafte, nach bestimmten Kriterien zu beurteilende, Übereinstimmung festgestellt, so erfolgt in einem vierten Schritt 58 eine neue Schätzung des Objekts und eine einparainetrige PSF wird ermittelt. Diese neue Schätzung des Objekts und die einparametrige PSF nehmen dann wiederum Einfluss auf die Berechnung des erwarteten Bildes (Schritt 2). Wenn dann zu einem gewissen Zeitpunkt oder nach einer gewissen Zahl von Iterationen der Vergleich positiv beschieden wird, kann das berechnete Bild auf dem Monitor 25 dargestellt werden. Implementierungen des Algorithmus unterscheiden sich in der Art, wie das Rauschen im beobachteten Bild bewertet und die neue Schätzung durchgeführt wird.

Die Anwendung allgemeiner mathematischer und physikalischer constraints auf die Objektfunktion bzw. das Abbruchkriterium ist durch die PSF des verwendeten Objektivs 20 (Designparameter bekannt) bestimmt. Die einparametrige Beschreibung und Variation (Optimierung) der innerhalb des Anordnung möglichen PSFs. Elaubt eine schnelle, und zuverlässige Deconvolution.

Wenn also bei der Deconvolution die PSF als nur ungenau bekannt angenommen werden muss, da einige Größen nicht bekannt sind, so ist es doch nicht sinnvoll, beliebige bzw. nur allgemein eingeschränkte (positive und bandlimitierte) PSFs zuzulassen, wenn bei guter Qualität des Objektivs die optisch möglichen PSFs sich auf einen kleinen, nur eindimensionalen Unterraum beschränken. Durch diese Vorgehensweise ist sowohl eine deutliche Verringerung der Rechenzeit als auch der Artefakte zu erwarten. Insbesondere ist der erwähnte Unterraum eben identisch mit dem Unterraum der PSFs entsprechend einer Drehung einer Korrektionsfassung, die am Objektiv 20 angebracht sein kann. Damit ist es nun auch möglich, den Korrekturbereich eines gegebenen Objektivs durch "Bildverarbeitung" im Computer quasi zu "vergrößern" oder sogar ein Objektiv ohne Korrektionsfunktion nachträglich um diese Eigenschaft zu "erweitern". Umgekehrt kann natürlich der Suchraum bei ordnungsgemäßer Einstellung der mechanischen Korrektionsfassung durch den Benutzer, unter visueller Kontrolle auf besten Bildeindruck oder Kontrast auf dem Monitor 25 weiter eingeschränkt werden.

Das Ergebnis der einparametrigen Deconvolution wird zur Abbildung, der dreidimensionalen, in einem physiologischen Medium eingebetteten, mikroskopischen Objekte durch den Rechner 26 auf dem Monitor 25 dargestellt.

## Patentansprüche

1. Verfahren zur Blind Deconvolution mikroskopischer Bilder, **gekennzeichnet durch** die folgenden Schritte:

   a) Aufnehmen (50) bzw. Erzeugen von Objektdaten mindestens eines mikroskopischen Objekts (40),
   b) Ermitteln (52) eines erwarteten Bildes unter dem Einfluss einer geschätzten PSF, Point Spread Function, die von einem einzigen Parameter abhängt;
   c) Vergleichen (56) der aufgenommenen bzw. erzeugten Bilddaten mit den **durch** die geschätzte PSF berechneten Bilddaten,
   d) Bei schlechten Ergebnis des Vergleichs Bestimmen einer neuen PSF, die ebenfalls nur in einem experimentellen Parameter variiert ist, und
   e) Durchführen der Schritte b bis d bis eine auseichende Übereinstimmung zwischen den berechneten und den aufgenommenen bzw. erzeugten Objektdaten erreicht ist.

2. Verfahren nach Anspruch 1, **dadurch gekennzeichnet, dass** der einzige Parameter die optischen Eigenschaften der Umgebung des Objekts (40) zwischen einem Objektiv (20) eines Mikroskops (1) und dem Bereich oberhalb des Objekts (40) berücksichtigt.

3. Verfahren nach Anspruch 1, **dadurch gekennzeichnet, dass** die das Objekt (40) umgebende Umgebung aus einem Schichtsystem mehrerer Schichten (43, 44, 46, 47) besteht, die senkrecht zur optischen Achse (21) der Objektivs (20) angeordnet sind.

4. Verfahren nach Anspruch 3, **dadurch gekennzeichnet, dass** die Schichten (43, 44, 46, 47) die Dicke des Objektträgers (13), die Größe oder Dicke des Objekts (40), die Dicke des Deckglases (43), die Schichtdicke des Immersionsmediums (47) und den Abstand zwischen Objekt (40) und Deckglas (43) umfassen

5. Verfahren nach Anspruch 3, **dadurch gekennzeichnet, dass** jede der die Schichten (43, 44, 46, 47) als individuelle Parameter die Dicke der Schicht und den Brechungsindex umfasst.

6. Verfahren nach einem der Ansprüche 1 bis 5, **dadurch gekennzeichnet, dass** der einzige, veränderbare Parameter eine funktionelle Repräsentanz der einzelnen Parameter der Schichten (43, 44, 46, 47) in einem Schichtsystem ist.

7. Verfahren nach Anspruch 6, **dadurch gekennzeichnet, dass** jede der Schichten (43, 44, 46, 47) in dem Schichtsystem durch einen geeigneten Wert des Korrekturwerts **Cr** hinreichend gut angenähert wird, und dass das gesamte Schichtsystem dann hinreichend gut durch einen Korrekturwert **Cr,** der gleich der Summe der einzelnen **Crs** ist, beschrieben werden kann.

8. Verfahren nach Anspruch 7, **dadurch gekennzeichnet, dass** $Cr = d \times \Delta n$ oder $Cr = \Delta d \times \Delta n$, wobei d die Dicke einer Schicht ist und n der jeweilige Brechungsindex der Schicht.

**9.** Verfahren nach Anspruch 6, **dadurch gekennzeichnet, dass** mit dem Parameter Variationen von Dicke des Objektträgers (13), der Temperatur und des Brechungsindexes des Immersionsmediums (47) oder der Temperatur und des Brechungsindexes einer physiologischen Lösung, und die Dicke des Deckglases (43) kompensiert werden.

**10.** Computerprogramm, das Programm-Code Mitteln enthält, die, wenn Sie auf einem Datenverarbeitungssystem durchgeführt werden jeden der folgenden Schritte eines Verfahrens für Blind Deconvolution mikroskopischer Bilder durchführen

> a) Aufnehmen (50) bzw. Erzeugen von Objektdaten mikroskopischer Objekte (40),
> b) Ermitteln (52) eines erwarteten Bildes unter dem Einfluss einer geschätzten PSF, die von einem einzigen Parameter abhängt;
> c) Vergleichen (56) der aufgenommenen bzw. erzeugten Bilddaten mit den durch die geschätzte PSF berechneten Bilddaten,
> d) Bei schlechten Ergebnis des Vergleichs Bestimmen einer neuen PSF, die ebenfalls nur in einem experimentellen Parameter variiert ist, und
> e) Durchführen der Schritte b bis d bis eine auseichende Übereinstimmung zwischen den berechneten und den aufgenommenen bzw. erzeugten Objektdaten erreicht ist.

**11.** Computerprogramm nach Anspruch 10, das weiteres enthält Programm-Code Mitteln, die wenn Sie auf einem Datenverarbeitungssystem durchgeführt werden, jeden der folgenden zusätzlichen Schritte durchführen: einzige Parameter die optischen Eigenschaften der Umgebung des Objekts (40) zwischen einem Objektiv (20) eines Mikroskops (1) und dem Bereich oberhalb des Objekts (40) berücksichtigt, und dass diese Eigenschaften in den Rechner (26) eingeben werden.

**12.** Computerprogramm Anspruch 11, das weiteres enthält Programm-Code Mitteln, die wenn Sie auf einem Datenverarbeitungssystem durchgeführt werden, jeden der folgenden zusätzlichen Schritte durchführen: mit dem Parameter Variationen der Schichten (43, 44, 46, 47) eines Schichtsystems kompensiert werden, die von der Dicke des Objektträgers (13), der Temperatur und des Brechungsindexes des Immersionsmediums (47) oder der Temperatur und des Brechungsindexes einer physiologischen Lösung, und der Dicke des Deckglases (43) abhängen.

**13.** Computerprogramm nach Anspruch 11, das weiteres enthält Programm-Code Mitteln, die wenn Sie auf einem Datenverarbeitungssystem durchgeführt werden, jeden der folgenden zusätzlichen Schritte durchführen: jede der Schichten (43, 44, 46, 47) in dem Schichtsystem durch einen geeigneten Wert des Korrekturwerts Cr hinreichend gut angenähert wird, und dass das gesamte Schichtsystem dann hinreichend gut durch einen Korrekturwert Cr, der gleich der Summe der einzelnen Crs ist, beschrieben werden kann.

**Claims**

**1.** Method for blind deconvolution of microscopic images, **characterized by** the following steps:

> a) recording (50) and/or generating object data at least of one microscopic object (40),
> b) determining (52) an expected image under the influence of an estimated PSF, Point Spread Function, which depends on a single parameter,
> c) comparing (56) the recorded and/or generated image data with the image data calculated by the estimated PSF,
> d) in the event of a poor result of the comparison, determining a new PSF that is likewise varied only in an experimental parameter, and
> e) carrying out steps b to d until a sufficient agreement is reached between the calculated and the recorded and/or generated object data.

**2.** Method according to Claim 1, **characterized in that** the single parameter takes account of the optical properties of the environment of the object (40) between an objective (20) of a microscope (1) and the region above the object (40).

**3.** Method according to Claim 1, **characterized in that** the environment surrounding the object (40) comprises a layer system of a number of layers (43, 44, 46, 47) which are arranged perpendicular to the optical axis (21) of the objective (20).

**4.** Method according to Claim 3, **characterized in that** the layers (43, 44, 46, 47) cover the thickness of the object carrier (13), the size or thickness of the object (40), the thickness of the cover glass (43), the layer thickness of the immersion medium (47) and the distance between the object (40) and cover glass (43).

**5.** Method according to Claim 3, **characterized in that** each of the layers (43, 44, 46, 47) covers the thickness of the layer and the refractive index as individual parameters.

**6.** Method according to one of Claims 1 to 5, **characterized in that** the single, variable parameter is a functional representation of the single parameters of the layers (43, 44, 46, 47) in a layer system.

**7.** Method according to Claim 6, **characterized in that** each of the layers (43, 44, 46, 47) in the layer system is approximated sufficiently well by a suitable value of the correction value Cr, and **in that** the entire layer system can then be described sufficiently well by a correction value Cr which is equal to the sum of the individual Crs.

**8.** Method according to Claim 7, **characterized in that** $Cr = d \times \Delta n$ or $Cr = \Delta d \times \Delta n$, d being the thickness of a layer, and n the respective refractive index of the layer.

**9.** Method according to Claim 6, **characterized in that** the parameter is used to compensate variations in thickness of the object carrier (13), in the temperature and the refractive index of the immersion medium (47) or in the temperature and the refractive index of a physiological solution, and the thickness of the cover glass (43).

**10.** Computer program which includes program code means which, when they are carried out on a data processing system, carry out each of the following steps of a method for blind deconvolution of microscopic images:

a) recording (50) and/or generating object data of microscopic objects (40),
b) determining (52) an expected image under the influence of an estimated PSF, which depends on a single parameter,
c) comparing (56) the recorded and/or generated image data with the image data calculated by the estimated PSF,
d) in the event of a poor result of the comparison, determining a new PSF that is likewise varied only in an experimental parameter, and
e) carrying out steps b to d until a sufficient agreement is reached between the calculated and the recorded and/or generated object data.

**11.** Computer program according to Claim 10, which further includes program code means which, when they are carried out on a data processing system, carry out each of the following additional steps:

the single parameter takes account of the optical properties of the environment of the object (40) between an objective (20) of a microscope (1) and the region above the object (40), and these properties are input into the computer (26).

**12.** Computer program according to Claim 11, which further includes program code means which, when they are carried out on a data processing system, carry out each of the following additional steps:

the parameter is used to compensate variations in the layers (43, 44, 46, 47) of a layer system which depend on the thickness of the object carrier (13), the temperature and the refractive index of the immersion medium (47) or the temperature and the refractive index of a physiological solution, and the thickness of the cover glass (43).

**13.** Computer program according to Claim 11, which further includes program code means which, when they are carried out on a data processing system, carry out each of the following additional steps:

each of the layers (43, 44, 46, 47) in the layer system is approximated sufficiently well by a suitable value of the correction value Cr, and the entire layer system can then be described sufficiently well by a correction value Cr which is equal to the sum of the individual Crs.

**Revendications**

1. Procédé pour la déconvolution à l'aveugle d'images microscopiques, **caractérisé par** les étapes suivantes :

   a) enregistrement (50) ou bien génération de données d'objets d'au moins un objet microscopique (40),
   b) détermination (52) d'une image attendue sous l'influence d'une PSF, Point Spread Function, évaluée qui dépend d'un seul paramètre ;
   c) comparaison (56) des données d'objets enregistrées ou bien générées avec les données d'image calculées par la PSF évaluée,
   d) en cas de mauvais résultat de la comparaison, définition d'une nouvelle PSF qu'on ne fait également varier que pour un paramètre expérimental, et
   e) exécution des étapes b à d jusqu'à obtenir une coïncidence suffisante entre les données d'objets calculées et les données d'objets enregistrées ou bien générées.

2. Procédé selon la revendication 1, **caractérisé en ce que** le seul paramètre respecte les caractéristiques optiques de l'environnement de l'objet (40) entre un objectif (20) d'un microscope (1) et l'espace au-dessus de l'objet (40).

3. Procédé selon la revendication 1, **caractérisé en ce que** l'environnement autour de l'objet (40) est constitué d'un système de couches à plusieurs couches (43, 44, 46, 47) disposées perpendiculairement à l'axe optique (21) de l'objectif (20).

4. Procédé selon la revendication 3, **caractérisé en ce que** les couches (43, 44, 46, 47) englobent l'épaisseur du support de l'objet (13), la taille ou l'épaisseur de l'objet (40), l'épaisseur du verre de couverture (43), l'épaisseur du milieu d'immersion (47) et la distance entre l'objet (40) et le verre de couverture (43).

5. Procédé selon la revendication 3, **caractérisé en ce que** chacune des couches (43, 44, 46, 47) englobe comme paramètres individuels l'épaisseur de la couche et l'indice de réfraction.

6. Procédé selon une des revendications 1 à 5, **caractérisé en ce que** le seul paramètre pouvant être modifié est une représentation fonctionnelle des paramètres individuels des couches (43, 44, 46, 47) dans un système de couches.

7. Procédé selon la revendication 6, **caractérisé en ce que** chacune des couches (43, 44, 46, 47) dans le système de couches est suffisamment bien approchée par une valeur appropriée de la valeur de correction Cr et **en ce que** l'ensemble du système de couches peut alors être suffisamment bien décrit par une valeur de correction Cr qui est égale à la somme des Crs individuels.

8. Procédé selon la revendication 7, **caractérisé en ce que** $Cr = d \times \Delta n$ ou $Cr = \Delta d \times \Delta n$, où d est l'épaisseur d'une couche et $n$ l'indice de réfraction correspondant de la couche.

9. Procédé selon la revendication 6, **caractérisé en ce que** le paramètre permet de compenser les variations d'épaisseur du support des objets (13), de la température et de l'indice de réfraction du milieu d'immersion (47) ou de la température et de l'indice de réfraction d'une solution physiologique, et l'épaisseur du verre de couverture (43).

10. Programme d'ordinateur contenant des moyens de code de programme qui, lorsqu'ils sont exécutés sur un système de traitement de données, exécutent chacune des étapes suivantes d'un procédé de déconvolution à l'aveugle d'images microscopiques :

    a) enregistrement (50) ou bien génération de données d'objets d'objets microscopiques (40),
    b) détermination (52) d'une image attendue sous l'influence d'une PSF évaluée qui dépend d'un seul paramètre ;
    c) comparaison (56) des données d'objets enregistrées ou bien générées avec les données d'image calculées par la PSF évaluée,
    d) en cas de mauvais résultat de la comparaison, définition d'une nouvelle PSF qu'on ne fait également varier que pour un paramètre expérimental, et
    e) exécution des étapes b à d jusqu'à ce qu'on obtienne une coïncidence suffisante entre les données d'objets calculées et les données d'objets enregistrées ou bien générées.

11. Programme d'ordinateur selon la revendication 10 contenant de plus des moyens de code de programme qui, lorsqu'ils sont exécutés sur un système de traitement de données, exécutent chacune des étapes supplémentaires suivantes : que le seul paramètre respecte les caractéristiques optiques de l'environnement de l'objet (40) entre un objectif (20) d'un microscope (1) et l'espace au-dessus de l'objet (40), et en ce que ces caractéristiques sont introduites dans le calculateur (26).

12. Programme d'ordinateur selon la revendication 11 contenant de plus des moyens de code de programme qui, lorsqu'ils sont exécutés sur un système de traitement de données, exécutent chacune des étapes supplémentaires suivantes : que le paramètre permet de compenser des variations des couches (43, 44, 46, 47) d'un système de couches qui dépendent de l'épaisseur du support des objets (13), de la température et de l'indice de réfraction du milieu d'immersion (47) ou de la température et de l'indice de réfraction d'une solution physiologique, et de l'épaisseur du verre de couverture (43).

13. Programme d'ordinateur selon la revendication 11 contenant de plus des moyens de code de programme qui, lorsqu'ils sont exécutés sur un système de traitement de données, exécutent chacune des étapes supplémentaires suivantes : que chacune des couches (43, 44, 46, 47) dans le système de couches est suffisamment bien approchée par une valeur appropriée de la valeur de correction Cr et en ce que l'ensemble du système de couches peut alors être suffisamment bien décrit par une valeur de correction Cr qui est égale à la somme des Crs individuels.

**Fig. 1**

**Fig. 2**

**Fig. 3**

**Fig. 4**

Intensität

Fig. 5

Z-Achse

Intensität

Fig. 6

Z-Achse

Fig. 7

Fig. 8

Intensität

Z-Achse

**Fig. 9**

Intensität

Z-Achse

**Fig. 10**

**Fig. 11**

**Fig. 12**

**Fig. 13**

**Fig. 14**